# EUROPÄISCHE PATENTSCHRIFT

(11) **EP 0 927 466 B1**
(45) Veröffentlichungstag und Bekanntmachung des Hinweises auf die Patenterteilung: **01.03.2000**
(21) Anmeldenummer: 97944694.5
(22) Anmeldetag: 10.09.1997
(51) Int. Cl.: H04B 1/16, H04B 1/38

(54) **VERFAHREN UND SCHALTUNGSANORDNUNG ZUR SPANNUNGSVERSORGUNG IN ELEKTRISCHEN FUNKTIONSEINHEITEN**
METHOD AND CIRCUIT ARRANGEMENT FOR THE POWER SUPPLY OF ELECTRICAL FUNCTIONAL UNITS
PROCEDE ET CIRCUIT POUR L'ALIMENTATION EN COURANT D'UNITES ELECTRIQUES FONCTIONNELLES

(30) Priorität: 18.09.1996 DE 19638115
(43) Veröffentlichungstag der Anmeldung: 07.07.1999
(73) Patentinhaber: SIEMENS AKTIENGESELLSCHAFT, 80333 München (DE)
(72) Erfinder: HOFMANN, Ludwig, D-85304 Ilmmünster (DE)
(86) Internationale Anmeldenummer: DE9702018
(87) Internationale Veröffentlichungsnummer: WO9812822

(56) Entgegenhaltungen:
- EP-A- 0 358 166
- WO-A-96/03811
- GB-A- 2 284 085

## Beschreibung

Die vorliegende Erfindung bezieht sich auf eine Schaltungsanordnung und auf ein Verfahren zur Spannungsversorgung in elektrischen Funktionseinheiten, die aus mehreren Schaltungselementen bestehen und von einer zentralen Spannungsquelle mit Spannung versorgt werden nach dem Oberbegriff der Patentansprüche 1 und 12.
Insbesondere bezieht sich die Erfindung auf die Gleichspannungsversorgung von Mobiltelefonen.

Bei Funktionseinheiten wie beispielsweise Mobiltelefonen, die aus mehreren Schaltungselementen bestehen, besteht häufig der Wunsch, die Betriebsspannung der jeweiligen Funktionseinheit zu verringern, zum Beispiel um kleinere und leichtere Batterien verwenden zu können. Eine Herabsetzung der Betriebsspannung kann aber andererseits zu vielfältigen Problemen bei den einzelnen Schaltungselementen führen.

Bei Mobiltelefonen werden heute zum Beispiel häufig 3V-Batterien statt der bisher üblichen 6V- oder 12V-Spannungsversorgung verwendet. Diese Verringerung der Betriebsspannung kann je nach Konstruktion und Betriebszustand zu einer Reihe von Schwierigkeiten bei einzelnen Schaltungselementen führen. Eine Herabsetzung der Betriebsspannung führt dazu, daß einzelne Schaltungselemente übersteuert und damit nicht mehr im linearen Bereich betrieben werden.

Infolge der höheren Stromaufnahme müssen auch Bufferkondensatoren größer ausgelegt werden, was wiederum dem Ziel der Miniaturisierung zuwiderlaufen kann. Schließlich führen höhere Ströme allgemein zu höheren Leitungsverlusten. Ein weiterer erheblicher Nachteil kann auch in der überproportional erhöhten Rauschempfindlichkeit bei Frequenzmodulation liegen. So führt eine Herabsetzung der Versorgungsspannung von 12V auf 3V etwa bei einem maximalen Spannungshub von 2V und einem Abstimmbereich von 75 MHz zu einer um den Faktor 10 erhöhten Modulations- und Störempfindlichkeit.

Aus WO-A-96 03811 ist eine Schaltungsanordnung zur Spannungsversorgung mehrerer Schaltungselemente bekannt, wobei zwischen der zentralen Spannungsquelle und Schaltungselementen eine Einrichtung geschaltet ist, die eine von der zentralen Spannungsquelle zugeführte Spannung in eine schaltungselementindividuelle Spannung umsetzt und diese Spannung den Schaltungselementen zugeführt wird.

Aufgabe der vorliegenden Erfindung ist nun die Bereitstellung einer Schaltungsanordnung bzw. eines Verfahrens, die einerseits die generelle Herabsetzung der Betriebsspannung in Funktionseinheiten wie einem Mobiltelefon erlauben, andererseits aber die oben aufgeführten Nachteile vermeidet.

Diese Aufgabe wird mit der in den Ansprüchen definierten Schaltungsanordnung und mit dem in den Ansprüchen definierten Verfahren gelöst.

Die vorliegende Erfindung stellt deshalb eine Schaltungsanordnung zur Spannungsversorgung in einer aus mehreren Schaltungselementen bestehenden elektrischen Funktionseinheit, vorzugsweise einem Mobiltelefon, bereit, die von einer zentralen Spannungsquelle mit Spannung, insbesondere Gleichspannung versorgt wird. Dabei wird insbesonders mindestens zwei Schaltungselementen jeweils eine Einrichtung zur Umsetzung der von der zentralen Spannungsquelle gelieferten Spannung derart zugeordnet, daß diese Schaltungselemente unabhängig voneinander jeweils mit einer schaltungselementindividuellen Spannung versorgt werden, die somit an den Bedarf des jeweiligen Schaltungselements angepaßt ist. Diese Anpassung kann zeitlich fest oder - in Abhängigkeit des jeweiligen Betriebszustands des Schaltungselements - variabel sein. Das bedeutet, daß zum Beispiel der Sendeendstufe dann, wenn sie sendet, eine erhöhte Spannung zugeführt werden kann, sie ansonsten aber stromlos geschaltet wird oder mit einer herabgesetzten allgemeinen Betriebsspannung versorgt wird.

Bei einer bevorzugten Schaltungsanordnung geben die Schaltungselemente selbst, vorzugsweise zeitabhängig Steuersignale zur Spannungsumsetzung an die jeweils zugeordneten Einrichtungen zur Spannungsumsetzung aus. Damit kann die Spannungsversorgung unmittelbar an den jeweiligen Betriebszustand des Schaltungselements angepaßt werden.

Eine weitere erfindungsgemäße Schaltungsanordnung weist als ein Schaltungselement eine zentrale Logikschaltung auf, die, vorzugsweise zeitabhängig, Steuersignale zur schaltungselement- bzw. schaltungselementzustandsindividuellen Umsetzung der Spannung bildet und diese den verschiedenen Einrichtungen zur Spannungsumsetzung zuführt.

Bei einem Mobiltelefon werden vorzugsweise mindestens die Sendeendstufe und die Empfangseinheit individuell mit Spannung versorgt. Weiterhin können auch weitere Schaltungselemente wie der Steuersender oder verschiedene Verstärker individuell mit der benötigten Spannung versorgt werden. Im Idealfall erhalten alle relevanten Schaltungselemente ihre optimal angepaßte Versorgungsspannung je nach Betriebszustand zugeteilt. Vorzugsweise werden als Einrichtungen zur Gleichspannungsumsetzung für die einzelnen Schaltungselemente Schaltregler eingesetzt.

Erfindungsgemäß wird auch ein Verfahren zur Spannungsversorgung in einer aus mehreren Schaltungselementen bestehenden elektrischen Funktionseinheit, insbesondere in einem Mobiltelefon, bereitgestellt die von einer zentralen Spannungsquelle mit Spannung, insbesondere mit Gleichspannung versorgt wird. Dabei wird die von der zentralen Spannungsquelle gelieferte Spannung durch mindestens zwei Einrichtungen zur Umsetzung dieser Spannung, die jeweils einem Schaltungselement zugeordnet sind, nach Steuersignalen so umgesetzt, daß die einem Schaltungselement zu einem bestimmten Zeitpunkt zugeleitete gewandelte Spannung dessen Bedarf entspricht. Diese Steuerung erfolgt, vorzugsweise, zeitabhängig, das heißt in Abhängigkeit von dem jeweiligen Betriebszustand. Der jeweilige Bedarf wird in aller Regel in einem Kennfeld für bestimmte Betriebszustände vorher festgelegt. Es ist aber auch möglich eine dynamische Anpassung an sich verändernde Betriebszustände vorzusehen, zum Beispiel eine, etwa zeitlich begrenzte weitere Erhöhung der Versorgungsspannung für die Sendeendstufe bei längerem oder besonders leistungsintensivem Betrieb. Die Komplexität der Steuerung der individuellen Spannungsversorgung hängt im wesentlichen von den technischen Anforderungen an das Gerät und von der angestrebten Wirtschaftlichkeit der Lösung ab.

Wie oben beschrieben können prinzipiell beliebig viele oder alle Schaltungselemente individuell mit Spannung versorgt werden. Schaltungselemente, die bei Mobiltelefonen erfindungsgemäß vorzugsweise mit unterschiedlicher und damit einer zu ändernden Spannung versorgt werden, sind, neben der Sendeendstufe, Transmitter und Receiver und der Voltage Control Oscillator. Zur Gleichspannungstransformierung werden im Rahmen des erfindungsgemäßen Verfahrens vorzugsweise Schaltregler verwendet.

Im Rahmen der Erfindung können vielfältige Steuerungen implementiert werden. Vorzugsweise werden die Gleichspannungsumsetzungen jedoch nach Steuersignalen durchgeführt, die zeit- und bauteilabhängig von einer zentralen Logikschaltung an die Einrichtungen zur Spannungsumsetzung ausgegeben werden. In einem weiteren bevorzugten Verfahren werden die Steuersignale zeitabhängig von den jeweiligen Schaltungselementen an die jeweiligen zugeordneten Einrichtungen zur Gleichspannungsumsetzung ausgegeben.

Die vorliegende Erfindung wird im folgenden anhand der Figuren beschrieben. Dabei zeigt:
Fig. 1 ein Blockschaltbild einer ersten Ausführungsform der erfindungsgemäßen Schaltungsanordnung mit dezentraler Spannungssteuerung; und
Fig. 2 ein Blockschaltbild einer zweiten Ausführungsform der erfindungsgemäßen Schaltungsanordnung mit zentraler Spannungssteuerung.

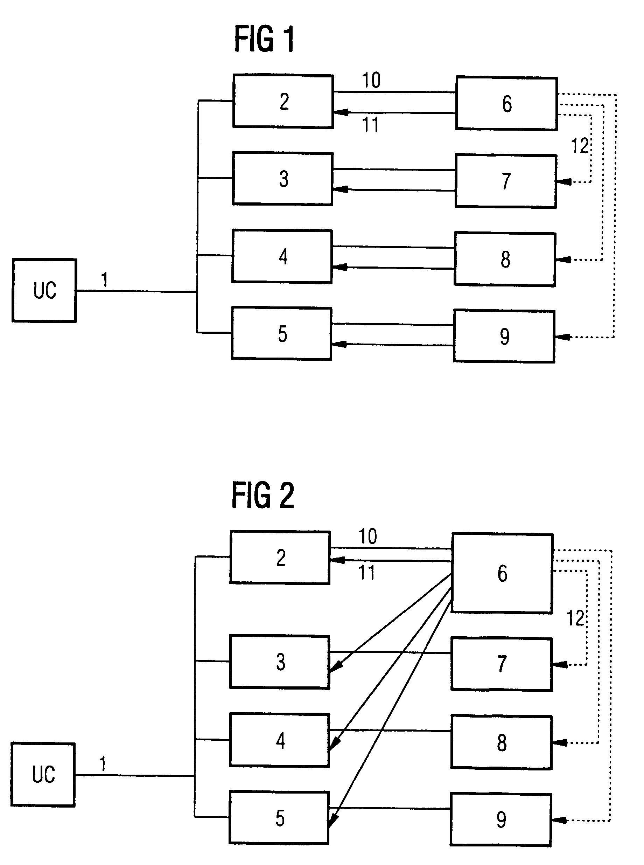

Fig. 1 zeigt ein Blockschaltbild mit einer dezentralen Spannungssteuerung verschiedener Schaltungselemente eines Mobiltelefons. Dieses Mobiltelefon enthält eine zentrale Gleichspannungsquelle UC, die zum Beispiel durch eine Batterie in der Größenordnung von etwa 2,7 - 3,6 Volt gebildet ist, Schaltungselemente 6 bis 9 und Einrichtungen (Versorgungseinheiten) 2 bis 5 zur Spannungsumsetzung: Die Einrichtungen 2 bis 5 sind zwischen der zentralen Spannungsquelle UC und den Schaltelementen 6 bis 9 angeordnet, wobei jeweils eine Einrichtung einem Schaltungselement zugeordnet ist.

Im Betrieb wird die Versorgungsgleichspannung UC über eine Leitung 1 an die Versorgungseinheiten 2 bis 5 der Schaltungselemente 6 bis 9 angelegt. Das Schaltungselement 6 ist in dem in Figur 1 dargestellten Ausführungsbeispiel eine Logikschaltung, die über Steuerleitungen 12 die anderen Schaltungselemente 7 bis 9, z.B. eine Receiver/Transmittereinheit, eine Sendeendstufe und einen Voltage Control Oscillator, steuert.

Die Schaltungselemente 6 bis 9 werden von den jeweils zugehörigen Versorgungseinheiten 2 bis 5 über Leitungen 10 mit schaltungselementindividueller Spannung von z.B. 3V/2V, 4V/2V, 20V/10V bzw. 5V/3V versorgt, wobei sich die beiden Voltangaben auf unterschiedliche Betriebszustände beziehen.

Die schaltungselementindividuelle Spannung kann zeitlich variabel sein und von Betriebszuständen des jeweiligen Schaltungselements abhängen, wobei das Schaltungselement in den Betriebszuständen unterschiedliche Versorgungsspannungen benötigt. So benötigt z.B. das Schaltungselement 6, das als Logikschaltung ausgebildet sein kann (Figur 2), in einem Betriebszustand "Batteriepuffer, Echtzeituhr" eine Versorgungsspannung von 1,5 V, in einem Betriebszustand "standby" eine Versorgungsspannung von 2 V und in dem Betriebszustand "voll arbeitend" eine Versorgungsspannung von 3 V.

Ein Schaltungselement 7, daß als spannungsgesteuerter Oszilator ausgebildet sein kann, benötigt in einem Betriebszustand "Aktiv" eine Versorgungsspannung von 4 V und in einem Betriebszustand "Inaktiv" eine Versorgungsspannung von 2 V. Ein Schaltungselement 8, daß als Sendeendstufe ausgebildet sein kann, benötigt in einem Betriebszustand "Senden" eine Versorgungsspannung von 20 V und in einem Betriebszustand "Ausgeschaltet" eine Versorgungsspannung von 10 V.

Über Steuerleitungen bzw. Verbindungswege 11 senden die Schaltungselemente 6 - 9 Steuersignale an ihre zugehörigen Versorgungseinheiten 2 bis 5. Die Steuersignale enthalten jeweils eine Information, die die schaltungselementindividuell bzw. schaltungselementzustandsindividuell benötigte Versorgungsspannung bezeichnet.

Die Versorgungseinheiten 2 bis 5 enthalten dabei eine Einrichtung zur Umsetzung der von der zentralen Spannungsquelle gelieferten Gleichspannung, vorzugsweise einen Schaltregler, MAX 608 der Firma Maxim. Im Rahmen der vorliegenden Erfindung kann auch auf eine oder mehrere Steuerleitungen 11 verzichtet werden, wenn ein festes Übersetzungsverhältnis zwischen der von der zentralen Spannungsquelle UC zugeführten Spannung und der den Schaltungselementen zuzuführenden Spannung besteht.

Fig. 2 zeigt das Blockschaltbild einer weiteren Ausführungsform der erfindungsgemäßen Schaltungsanordnung.

Im Unterschied zu der in Fig. 1 dargestellten Schaltungsanordnung verbinden alle Steuerleitungen 11 die Logikschaltung 6 mit den Versorgungseinheiten 2 bis 5. Die Logikschaltung 6 gibt den Schaltungselementen 7 bis 9 Informationen über die Betriebszustände vor und steuert hierzu passend die entsprechenden Einheiten 2 bis 5.

## Patentansprüche

1. Schaltungsanordnung zur Spannungsversorgung einer elektrischen Funktionseinheit, die eine zentrale Spannungsquelle (UC) und mehrere Schaltungselemente (6, 7, 8, 9) aufweist, denen Versorgungsspannung zugeführt wird, wobei zwischen der zentralen Spannungsquelle (UC) und einem Schaltungselement (6, 7, 8, 9) eine erste, diesem Schaltungselement (6, 7, 8, 9) zugeordnete Einrichtung (2, 3, 4, 5) geschaltet ist, die die von der zentralen Spannungsquelle (UC) zugeführte Spannung in eine schaltungselementindividuelle Spannung umsetzt und diese Spannung dem Schaltungselement (6, 7, 8, 9) zuführt,
**dadurch gekennzeichnet,**
daß das Schaltungselement (6, 7, 8, 9) Betriebszustände annimmt, die unterschiedliche Versorgungsspannungen erfordern, und daß die erste Einrichtung (2, 3, 4, 5) die von der zentralen Spannungsquelle (UC) zugeführte Spannung in schaltungselementzustandsindividuelle Spannungen umsetzt und diese Spannungen dem Schaltungselement (6, 7, 8, 9) zuführt.

2. Schaltungsanordnung nach Anspruch 1, dadurch gekennzeichnet, daß die erste Einrichtung (2, 3, 4, 5) steuerbar ist.

3. Schaltungsanordnung nach Anspruch 1, dadurch gekennzeichnet, daß das Verhältnis zwischen der von der zentralen Spannungsquelle (UC) zugeführten Spannung und der dem Schaltungselement (6, 7, 8, 9) zuzuführenden Spannung fest ist.

4. Schaltungsanordnung nach Anspruch 2, dadurch gekennzeichnet, daß die erste Einrichtung (2, 3, 4, 5) von dem zugeordneten Schaltungselement (6, 7, 8, 9) steuerbar ist.

5. Schaltungsanordnung nach einem der Ansprüche 1 bis 2, dadurch gekennzeichnet, daß die erste Einrichtung (2, 3, 4, 5) von einer zweiten Einrichtung (6) steuerbar ist.

6. Schaltungsanordnung nach Anspruch 5, dadurch gekennzeichnet, daß mindestens ein Teil (7, 8, 9) der Schaltungselemente der Funktionseinheit von der zweiten Einrichtung (6) steuerbar ist.

7. Schaltungsanordnung nach einem der vorstehenden Ansprüche, dadurch gekennzeichnet, daß die erste Einrichtung (2, 3, 4, 5) ein Schaltregler ist.

8. Schaltungsanordnung nach einem der vorstehenden Ansprüche, dadurch gekennzeichnet, daß die elektrische Funktionseinheit ein Mobiltelefon ist.

9. Schaltungsanordnung nach Anspruch 1, dadurch gekennzeichnet, daß das Schaltungselement (6, 7, 8, 9) eine Sendeeinheit oder eine Empfangseinheit ist.

10. Schaltungsanordnung nach einem der vorstehenden Ansprüche, dadurch gekennzeichnet, daß die zentrale Spannungsquelle (UC) eine Gleichspannungsquelle ist.

11. Verfahren zur Spannungsversorgung einer elektrischen Funktionseinheit, die eine zentrale Spannungsquelle (UC) und mehrere Schaltungselemente (6, 7, 8, 9) aufweist, denen Versorgungsspannung zugeführt wird, wobei eine der zentralen Spannungsquelle (UC) und einem Schaltungselement (6, 7, 8, 9) zwischengeschaltete erste, diesem Schaltungselement (6, 7, 8, 9) zugeordnete Einrichtung (2, 3, 4, 5) die von der zentralen Spannungsquelle (UC) zugeführte Spannung in eine schaltungselementindividuelle Spannung umsetzt und diese Spannung dem Schaltungselement (6, 7, 8, 9) zuführt,
**dadurch gekennzeichnet,**
daß das Schaltungselement (6, 7, 8, 9) Betriebszustände annimmt, die unterschiedliche Versorgungsspannungen erfordern, und daß die erste Einrichtung (2, 3, 4, 5) die von der zentralen Spannungsquelle (UC) zugeführte Spannung in schaltungselementzustandsindividuelle Spannungen umsetzt und diese Spannungen dem Schaltungselement (6, 7, 8, 9) zuführt.

12. Verfahren nach Anspruch 11, dadurch gekennzeichnet, daß die erste Einrichtung (2, 3, 4, 5) von dem zugeordneten Schaltungselement (6, 7, 8, 9) oder von einer zweiten Einrichtung (6) durch ein Steuerungssignal gesteuert wird und daß die erste Einrichtung (2, 3, 4, 5) in Abhängigkeit des Steuerungssignals die von der zentralen Spannungsquelle (UC) zugeführte Spannung in eine schaltungselementindividuelle oder schaltungselementzustandsindividuelle Spannung umsetzt und diese Spannung dem Schaltungselement (6, 7, 8, 9) zuführt.

## Claims

1. Circuit arrangement for supplying power to an electrical functional unit, which has a central power source (UC) and a plurality of circuit elements (6, 7, 8, 9) to which supply voltage is supplied, a first device (2, 3, 4, 5) which is assigned to the circuit element (6, 7, 8, 9) being connected between the central power source (UC) and said circuit element (6, 7, 8, 9), said device (2, 3, 4, 5) converting the voltage which is supplied by the central power source (UC) into a circuit-element-specific voltage and supplying this voltage to the circuit element (6, 7, 8, 9), characterized in that the circuit element (6, 7, 8, 9) assumes operating states which require different supply voltages, and in that the first device (2, 3, 4, 5) converts the voltage supplied by the central power source (UC) into voltages which are specific to the states of the circuit elements and supplies these voltages to the circuit element (6, 7, 8, 9).

2. Circuit arrangement according to Claim 1, characterized in that the first device (2, 3, 4, 5) can be controlled.

3. Circuit arrangement according to Claim 1, characterized in that the ratio between the voltage which is supplied by the central power source (UC) and the voltage which is to be supplied to the circuit element (6, 7, 8, 9) is fixed.

4. Circuit arrangement according to Claim 2, characterized in that the first device (2, 3, 4, 5) can be controlled by the assigned circuit element (6, 7, 8, 9) .

5. Circuit arrangement according to one of Claims 1 to 2, characterized in that the first device (2, 3, 4, 5) can be controlled by a second device (6).

6. Circuit arrangement according to Claim 5, characterized in that at least some (7, 8, 9) of the circuit elements of the functional unit can be controlled by the second device (6).

7. Circuit arrangement according to one of the preceding claims, characterized in that the first device (2, 3, 4, 5) is a switched-mode regulator.

8. Circuit arrangement according to one of the preceding claims, characterized in that the electrical functional unit is a mobile phone.

9. Circuit arrangement according to Claim 1, characterized in that the circuit element (6, 7, 8, 9) is a transmitter unit or a receiver unit.

10. Circuit arrangement according to one of the preceding claims, characterized in that the central power source (UC) is a d.c. voltage power source.

11. Method for supplying power to an electrical functional unit which has a central power source (UC) and a plurality of circuit elements (6, 7, 8, 9), to which supply voltage is supplied, a first device (2, 3, 4, 5) which is connected between the central power source (UC) and a circuit element (6, 7, 8, 9) and is assigned to said circuit element (6, 7, 8, 9) converting the voltage which is supplied by the central power source (UC) into a circuit-element-specific voltage and supplying this voltage to the circuit element (6, 7, 8, 9), characterized in that the circuit element (6, 7, 8, 9) assumes operating states which require different supply voltages, and in that the first device (2, 3, 4, 5) converts the voltage supplied by the central power source (UC) into voltages which are specific to the states of the circuit elements and supplies these voltages to the circuit element (6, 7, 8, 9).

12. Method according to Claim 11, characterized in that the first device (2, 3, 4, 5) is controlled by the assigned circuit element (6, 7, 8, 9) or by a second device (6) by means of a control signal, and in that the first device (2, 3, 4, 5) converts, as a function of the control signal, the voltage supplied by the central power source (UC) into a voltage which is specific to the switching element or to the state of the switching element, and supplies this voltage to the switching element (6, 7, 8, 9).

## Revendications

1. Configuration de circuit pour l'alimentation en tension d'une unité électrique fonctionnelle, qui présente une source de tension centrale (UC) et plusieurs éléments de circuit (6, 7, 8, 9), auxquels est amenée une tension d'alimentation, entre la source de tension centrale (UC) et un élément de circuit (6, 7, 8, 9) et il est mis en cuircuit un premier dispositif (2, 3, 4, 5) associé à cet élément de circuit (6, 7, 8, 9) qui convertit la tension délivrée par la source de tension centrale (UC) en une tension propre à l'élément de circuit et amène cette tension à l'élément de circuit (6, 7, 8, 9),
caractérisée en ce que
l'élément de circuit (6, 7, 8, 9) accepte des états de fonctionnement qui exigent des tensions d'alimentation différentes et en ce que le premier dispositif (2, 3, 4, 5) convertit la tension délivrée par la source de tension centrale (UC) en des tensions propres à l'état de l'élément de circuit et amène ces tensions à l'élément de circuit (6, 7, 8, 9).

2. Configuration de circuit selon la revendication 1, caractérisée en ce que le premier dispositif (2, 3, 4, 5) peut être commandé.

3. Configuration de circuit selon la revendication 1, caractérisée en ce que le rapport entre la tension délivrée par la source de tension centrale (UC) et la tension à délivrer à l'élément de circuit (6, 7, 8, 9) est fixe.

4. Configuration de circuit selon la revendication 2, caractérisée en ce que le premier dispositif (2, 3, 4, 5) peut être commandé par l'élément de circuit associé (6, 7, 8, 9).

5. Configuration de circuit selon l'une quelconque des revendications 1 à 2, caractérisée en ce que le premier dispositif (2, 3, 4, 5) peut être commandé par un deuxième dispositif (6).

6. Configuration de circuit selon la revendication 5, caractérisée en ce qu'au moins une partie (7, 8, 9) des éléments de circuit de l'unité fonctionnelle peut être commandée par le deuxième dispositif (6).

7. Configuration de circuit selon l'une quelconque des revendications précédentes, caractérisée en ce que le premier dispositif (2, 3, 4, 5) est un régulateur de commutation.

8. Configuration de circuit selon l'une quelconque des revendications précédentes, caractérisée en ce que l'unité fonctionnelle électrique est un téléphone mobile.

9. Configuration de circuit selon la revendication 1, caractérisée en ce que l'élément de circuit (6, 7, 8, 9) est une unité d'émission ou une unité de réception.

10. Configuration de circuit selon l'une quelconque des revendications précédentes, caractérisée en ce que la source de tension centrale (UC) est une source de tension continue.

11. Procédé pour l'alimentation en tension d'une unité fonctionnelle électrique, qui présente une source de tension centrale (UC), et plusieurs éléments de circuit (6, 7, 8, 9) auxquels une tension d'alimentation est amenée, dans lequel un premier dispositif (2, 3, 4, 5) intercalé entre la source de tension centrale (UC) et un élément de circuit (6, 7, 8, 9), et associé à cet élément de circuit (6, 7, 8, 9), convertit la tension délivrée par la source de tension centrale (UC) en une tension propre à l'élément de circuit et amène cette tension à l'élément de circuit (6, 7, 8, 9), caractérisé en ce que l'élément de circuit (6, 7, 8, 9) accepte des états de fonctionnement qui exigent des tensions d'alimentation différentes, et en ce que le premier dispositif (2, 3, 4, 5) convertit la tension délivrée par la source de tension centrale (UC) en des tensions propres à l'état de l'élément de circuit et amène cette tension à l'élément de circuit (6, 7, 8, 9).

12. Procédé selon la revendication 11, caractérisé en ce que le premier dispositif (2, 3, 4, 5) est commandé par l'élément de circuit associé et par un deuxième dispositif (6) au moyen d'un signal de commande et en ce que le premier dispositif (2, 3, 4, 5) convertit, en fonction du signal de commande, la tension délivrée par la source de tension centrale (UC) en une tension propre à l'élément de circuit ou propre à l'état de l'élément de circuit et amène cette tension à l'élément de circuit (6, 7, 8, 9).
